# EUROPÄISCHE PATENTSCHRIFT

(11) **EP 1 171 695 B1**
(45) Veröffentlichungstag und Bekanntmachung des Hinweises auf die Patenterteilung: **13.11.2002**
(21) Anmeldenummer: 00910477.9
(22) Anmeldetag: 24.03.2000
(51) Int. Cl.: F01M 1/16, F16N 29/04, F01M 11/10

(54) **VERFAHREN UND EINRICHTUNG ZUR ÜBERWACHUNG VON GLEITLAGERN EINER HUBKOLBEN-MASCHINE, INSBESONDERE EINES VERBRENNUNGSMOTORS**
METHOD AND DEVICE FOR MONITORING PLAIN BEARINGS OF A RECIPROCATING PISTON MACHINE, ESPECIALLY AN INTERNAL COMBUSTION ENGINE
PROCEDE ET DISPOSITIF POUR CONTROLER LES PALIERS LISSES D'UN MOTEUR A PISTON ALTERNATIF, NOTAMMENT UN MOTEUR A COMBUSTION INTERNE

(30) Priorität: 22.04.1999 CH 74299
(43) Veröffentlichungstag der Anmeldung: 16.01.2002
(73) Patentinhaber: Electrical Engineering Company Ltd., 9490 Vaduz (LI)
(72) Erfinder: STEDHAM, David, Reno, NV 89511 (US)
(74) Vertreter: Schmauder, Klaus Dieter
(86) Internationale Anmeldenummer: CH0000175
(87) Internationale Veröffentlichungsnummer: WO00065205

(56) Entgegenhaltungen:
- EP-A- 0 021 524
- EP-A- 0 141 348
- EP-A- 0 203 910
- US-A- 4 109 506
- US-A- 4 167 172
- US-A- 4 406 169

## Beschreibung

### Technisches Gebiet

Die Erfindung betrifft ein Verfahren zur Überwachung von Gleitlagern einer Hubkolben-Maschine, insbesondere eines Verbrennungsmotors gemäss Oberbegriff des Anspruches 1 sowie eine Einrichtung zur Durchführung des Verfahrens gemäss Oberbegriff des Anspruches 7.

### Stand der Technik

Verfahren und Einrichtungen zur Überwachung von Gleitlagern insbesondere einer Hubkolben-Maschine wie eines Verbrennungsmotors sind aus der EP-B-0 141 348 bekannt. Anhand der Überwachung der Grundlager einer Kurbelwelle eines Verbrennungsmotors wird ein Verfahren und eine Einrichtung zur Überwachung der Schmierung an der Berührungsstelle zwischen zwei durch den Schmierfilm gegeneinander isolierten, sich relativ zueinander bewegenden Teilen aus unterschiedlichen, elektrisch leitenden Werkstoffen beschrieben. Die beiden Teile liegen in einem durch die Schmierstelle selbst gehenden elektrischen Stromkreis mit einer Spannungsquelle und äusserer Verbindung. Der sich beim Abriss des Schmierfilms verringernde Stromkreiswiderstand einerseits und die beim Abriss des Schmierfilmes an der Berührungsstelle durch die Reibungswärme auftretende als galvanische Spannungsquelle dienende Thermospannung andererseits werden benutzt, um beim Auftreten einer durch Schmiermangel hervorgerufenen, grossflächigen und einen Hitzeschaden ankündigenden metallischen Berührung der beiden Gleitlagerteile über die äussere elektrische Verbindung des Stromkreises einen Stromfluss zu erzeugen, der als Steuer- beziehungsweise als Alarmsignal dient. Die Verbindung des Stromkreises ist als ein der grossflächigen Berührungsstelle elektrische angepasster Widerstand ausgebildet. Der an dem Widerstand der äusseren Verbindung auftretende Spannungsabfall wird gemessen und dazu verwendet, ein Steuersignal auszulösen. Das Steuersignal sei hier in breiter Form verstanden, wobei es auch als Schaltsignal zum Auslösen weiterer Aktionen, wie zum Beispiel zum Anhalten des Verbrennungsmotors oder Auslösen einer Alarmvorrichtung dienen kann. Zweckmässigerweise sind das Verfahren und die Einrichtung so ausgebildet, dass im Falle von kurzzeitig auftretenden Spannungsspitzen die Steuersignalabgabe so lange unterdrückt wird, bis eine vorher bestimmte zeitliche Häufigkeit der Spannungsspitzen und/oder eine ansteigende Tendenz der Amplitude auftritt.

Bei der gleichzeitigen Überwachung mehrerer in einer gemeinsamen Baueinheit oder getrennt angeordneter Schmierstellen beziehungsweise Gleitlagern ist es nicht möglich, anhand des Thermostromes festzustellen, von welchem Gleitlager der Thermostrom ausgeht. Zur Feststellung der betroffenen Gleitlager ist es notwendig, die einzelnen Schmierstellen mit einer zusätzlichen Thermoüberwachung zu versehen und die an den einzelnen Gleitlagern auftretenden Temperaturen zu messen und zu vergleichen, um dann feststellen zu können, welche Lagertemperatur einen ein Steuersignal auslösenden Wert erreicht hat. Eine solche Massnahme ist relativ aufwendig und insbesondere nicht geeignet für Gleitlager, an denen keine geeignete zusätzliche Thermoüberwachung angeordnet werden kann, wie dies beispielsweise für Pleuellager und den Kolbenbolzen eines Kolbens der Fall ist.

### Darstellung der Erfindung

Aufgabe der Erfindung ist es, ein Verfahren und eine Einrichtung zur Überwachung von Gleitlagern einer Hubkolben-Maschine, insbesondere eines Verbrennungsmotors weiter zu verbessern.

Die Aufgabe wir erfindungsgemäss gelöst:
a) bei dem eingangs genannten Verfahren durch die kennzeichnenden Merkmale des Anspruches 1;
b) bei der eingangs genannten Einrichtung durch die kennzeichnenden Merkmale des Anspruches 7.

Dadurch, dass man die erhaltene Thermostrom-Kurve beispielsweise elektronisch vergrössert und spreizt sowie in Beziehung setzt zur Winkelstellung der Kurbelwelle und die erhaltene Kurve über ein ganzes Arbeitsspiel nach signifikanten Symptomen der Gleitlager absucht, erhält man sehr detaillierte Informationen über den Lagerzustand einerseits und über den Ort eines etwaigen Schadens andererseits. Eine solche Analyse der Thermostrom-Kurve kann vorzugsweise mittels eines Rechenprogrammes erfolgen, das beispielsweise anhand von Testversuchen erstellt werden kann. Das Verfahren und die Einrichtung liefern überdies eine vorzugsweise fehlalarmfreie Überwachung, denn bei einwandfreien Gleitlagern tritt kein Thermostrom und damit kein Steuersignal auf.

Tritt überhaupt keine Thermostrom-Kurve auf, so bedeutet dies also "einwandfreier Lagerzustand überall". Eine gleichbleibende Thermostrom-Kurve geringen Niveaus deutet auf eine nicht schädliche Mischreibung hin. Kurzzeitig auftretende und wieder verschwindende Kurvenausschläge können ein Hinweis auf vorübergehende Schäden (Hotspots), wie zum Beispiel das Ausbrechen von Teilen der Lagerschalen, bedeuten, die sich jedoch durch Verschmelzen der ausgebrochenen Teile wieder selbst reparieren können. Treten hingegen fortlaufend einzelne hohe Kurvenausschläge auf, so ist dies ein Hinweis auf ein schadhaftes Gleitlager, dessen Lage sich beispielsweise anhand der Winkelstellung, in der sich der Kurvenausschlag befindet, und/oder der Kurvenform feststellen lässt. Bestimmte Veränderungen der Kurven während eines Lastwechsels und/oder bei unterschiedlichen Drehzahlen oder Belastungen können ebenfalls Hinweise auf bestimmte Symptome der Gleitlager liefern. So kann beispielsweise ein Ansteigen einer Grundkurve bei höherer Drehzahl und insbesondere bei höherer Leistung ein Anzeichen für verstärkte Mischreibung bedeuten, die auf einen schlechten Schmierfilm, das heisst ungeeignetes Schmiermittel und/oder eine Überlastung der Maschine zurückgeführt werden kann. Letzteres ist insbesondere dann bedenklich, wenn die Symptome bereits unterhalb der vorgegebenen Dauerleistung auftreten.

Das Verfahren lässt sich bei allen Hubkolben-Maschinen anwenden, bei denen der Kraft- und damit auch der Lagerspielund Belastungsverlauf während des Arbeitsspieles nicht konstant ist. Solche Hubkolben-Maschinen sind beispielsweise Kolbenpumpen und insbesondere Verbrennungsmotoren, die mit einem Hubkolben in einem Zylinder arbeiten. Die Hubkolben-Maschinen können einen oder mehrere Zylinder aufweisen und nach dem 2-Takt (entspricht einer Kurbelwellenumdrehung, das heisst 360° Drehwinkel) oder 4-Takt (entspricht zwei Kurbelwellenumdrehungen, das heisst 720° Drehwinkel) Arbeitsspiel arbeiten. Dies gilt bei Verbrennungsmotoren unabhängig von dem verwendenten Treibstoff, der beispielsweise Diesel oder Schweröl, Benzin, Gas oder dergleichen sein kann.

Zur Auswertung der Thermostrom-Kurve können noch zahlreiche präzisierende oder zusätzliche Parameter verwendet werden, wie unter anderem aus den abhängigen Ansprüchen hervorgeht.

Als Parameter für die Ermittlung der Lage des Gleitlagers wählt man vorteilhaft nach Anspruch 2 die Winkelstellung, in der die Schmierfilm-Dicke während des Normalbetriebes des Gleitlagers am kleinsten ist. An dieser Stelle ist somit auch der Durchgangswiderstand des Schmierfilms am kleinsten und kann der galvanischen Leitfähigkeit entsprechen, sodass in dieser Winkelstellung ein Thermostrom feststellbar ist. Ausserdem ist die Wahrscheinlichkeit am grössten, dass dort am frühesten ein Lagerschaden entstehen kann. Ein geeigneter Parameter hierfür ist gemäss Anspruch 3 die Verlagerungsbahn des Lagerzapfens eines Gleitlagers.

Zur Lagebestimmung eignen sich insbesondere auch die Totpunktstellungen und/oder die Verbrennungsphase gemäss Anspruch 4. Weitere Parameter können nach Anspruch 5 das Drehmoment und/oder die Drehzahl sein. Bei Verbrennungsmotoren ist gemäss Anspruch 6 auch die Zündfolge ein wichtiger Parameter.

Zur Auswertung der ermittelten Daten wählt man zweckmässigerweise ein gemeinsames Steuergerät, mit dem Mittel zur Erfassung des Drehwinkels der Kurbelwelle verbunden sind. Gemäss Anspruch 8 sind mit dem Steuergerät auch Mittel zur Erfassung der Totpunktstellungen jedes Kolbens verbunden.

Nach Anspruch 9 ist die Einrichtung zweckmässigerweise mit einem Übermittlungsgerät für den Thermostrom ausgestattet. Dieses enthält beispielsweise gemäss Anspruch 10 einen Drehgeber zur Erfassung der Winkellage und der Drehzahl der Kurbelwelle. Um eine möglichst störungsfreie und niederohmige Übertragung des Thermostromes zu ermöglichen ist das Übermittlungsgerät gemäss Anspruch 11 mit einem Kollektor mit mehreren über den Umfang von Laufbahnen verteilten Schleifkontakten versehen. Die Auswertmöglichkeiten lassen sich durch einen Beschleunigungsgeber nach Anspruch 12 erweitern. Damit sich störende Schwingungen der Kurbelwelle bei der Übertragung nicht nachteilig auswirken, ist die Einrichtung zweckmässigerweise nach Anspruch 13 mit einer flexiblen Koppelungsvorrichtung ausgebildet, die vorzugsweise nach Anspruch 14 ausgestaltet ist.

Moderne Verbrennungsmotoren haben bereits eine umfangreiche Steuereinheit, in der die Betriebsdaten wie Drehzahlen, Zündzeitpunkt und dergleichen bereits verarbeitet werden, sodass solche Steuereinheiten mit dem Steuergerät zur Überwachung von Gleitlagern kombiniert werden können.

### Kurze Beschreibung der Zeichnungen

Ausführungsbeispiele der Erfindung werden nachfolgend anhand der Zeichnungen näher beschrieben, dabei zeigen:
- Figur 1: das Schema eines dreizylindrigen Verbrennungsmotors im Vertikalschnitt;
- Figur 2: ein Grundlager der Kurbelwelle des Verbrennungsmotors der Figur 1 in grösserem Massstab im Vertikalschnitt;
- Figur 3: das Schema eines Stromdurchganges durch die Anordnung von Zylinder, Kolbenbolzen, Pleuellager und Grundlager in Abhängigkeit vom Kurbelwinkel;
- Figur 4: das Diagramm des Auftretens eines Thermostromes an verschiedenen Gleitlagern des Verbrennungsmotors der Figur 1 in Abhängigkeit vom Kurbelwinkel;
- Figur 5: ein Zapfenverlagerungsdiagramm für ein Pleuellager in Polarkoordinaten;
- Figur 6: ein an einer Kurbelwelle angesetztes Übermittlungsgerät im Längsschnitt;
- Figur 7: eine flexible Koppelungsvorrichtung des Übermittlungsgerätes im Ausschnitt und teilweise geschnitten; und
- Figur 8: einen Kollektor des Übermittlungsgerätes in Ansicht quer zur Wellenachse.

### Wege zur Ausführung der Erfindung

Die vorliegende Erfindung geht aus von der Erkenntnislage der EP-B-0 141 348.

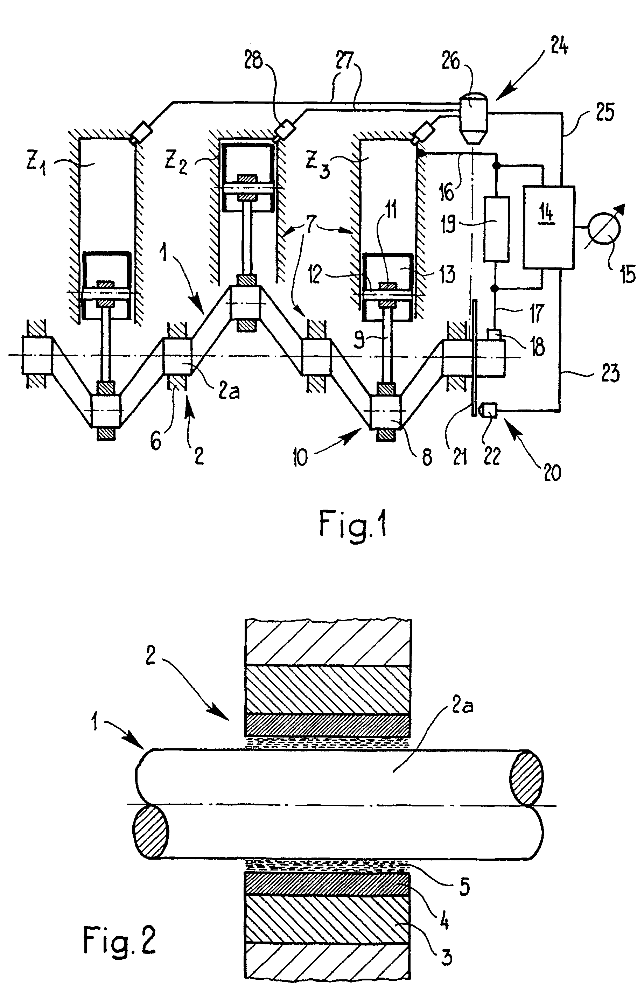

Die Figur 1 zeigt das Schema eines Hubkolben-Verbrennungsmotors mit beispielsweise drei Zylindern, der nach dem 4-Takt-Prinzip arbeitet, das heisst ein ganzes Arbeitsspiel verläuft über zwei Kurbelwellenumdrehungen beziehungsweise 720° Drehwinkel. Der Verbrennungsmotor enthält eine Kurbelwelle 1 eines Kurbeltriebes für die drei Zylinder Z₁, Z₂, Z₃. Der Kurbeltrieb ist in Gleitlagern sogenannten Grundlagern 2 gelagert, in denen jeweils Lagerzapfen 2a in Lagerschalen 3 ruhen, wie insbesondere aus Figur 2 hervorgeht. Zur Erzielung guter Gleiteigenschaften sind die Lagerschalen 3 auf ihrer an dem Lagerzapfen 2a anliegenden Seite beispielsweise mit einer Weissmetallschicht 4 ausgekleidet, wobei ein zwischen dieser Weissmetallschicht 4 und dem Lagerzapfen 2a vorhandener Schmierfilm 5 ein Heisslaufen der Gleitlager verhindert. Die Lagerschalen 3 werden von Lagerböcken 6 getragen, die mit einem gemeinsamen Gehäuse 7 einteilig sind.

Die Kurbelwelle 1 enthält für jeden Zylinder Z₁, Z₂, Z₃ einen Kurbelzapfen 8, an dem eine Pleuelstange 9 über ein Pleuellager 10 angeschlossen ist. Die Pleuelstange 9 steht über ein weiteres Gleitlager 11 mit einem Kolbenbolzen 12 eines Kolbens 13 in Verbindung, der im Zylinder Z₁ beziehungsweise Z₂ beziehungsweise Z₃ auf- und abgehend geführt ist. Der Aufbau des Pleuellagers 10 und des Gleitlagers 11 des Kolbenbolzens ist analog dem Grundlager 2 der Kurbelwelle 1.

Um nun den an irgend einem Gleitlager aufgrund eines unterbrochenen Schmierfilmes, der daraus resultierenden Erwärmung und schliesslich der Paarung verschiedener Metalle an dem Gleitlager entstehenden Thermostrom zu erfassen, ist der Verbrennungsmotor mit einem Steuergerät 14 ausgestattet, das eine Anzeigevorrichtung 15 enthält. Das Steuergerät 14 ist einerseits über eine Verbindungsleitung 16 mit dem Gehäuse 7 und über eine Verbindungsleitung 17 und einem Kollektor 18 mit der Kurbelwelle 1 elektrisch leitend verbunden. Parallel zum Steuergerät 14 sind die Verbindungsleitungen 16, 17 über einen niederohmigen Widerstand 19 kurzgeschlossen. Durch die in einem Gleitlager galvanisch erzeugte Thermospannung fliesst in dem niederohmigen Stromkreis 16,17,18,19 ein Thermostrom I, der an dem Widerstand 19 einen Spannungsabfall U auslöst. Dieses Signal wird in dem Steuergerät 14 verarbeitet und der Anzeigevorrichtung 15 zugeführt.

Das Steuergerät 14 ist mit Mitteln 20 ausgerüstet, um den Drehwinkel der Kurbelwelle 1 zu erfassen. Hierzu weisen diese Mittel 20 beispielsweise eine mit der Kurbelwelle 1 verbundene Impulsscheibe 21 auf, deren winkelabhängige Signale zum Beispiel am Umfang verteilte Strichkode von einem Sensor 22 erfasst und über eine Leitung 23 dem Steuergerät 14 zugeführt werden. Weiter ist das Steuergerät 14 mit Mitteln 24 ausgerüstet, die die Zündfolge an den Zylindern Z₁, Z₂ und Z₃ ermitteln. Hierzu dient beispielsweise eine Leitung 25, die mit einem Zündverteiler 26 verbunden ist, welcher den Zündstrom über Zündkabel 27 einzelnen Zündkerzen 28 zuführt. Die Mittel 20 für die Erfassung des Drehwinkels beziehungsweise die Mittel 24 für die Erfassung der Zündfolge können auch von einer elektronischen Steuervorrichtung des Verbrennungsmotors erhalten werden, letzteres insbesondere dann, wenn es sich bei dem Verbrennungsmotor um einen Dieselmotor handelt, der keine Zündkerzen aufweist sondern mit einer Kraftstoff-Einspritzung ausgerüstet ist.

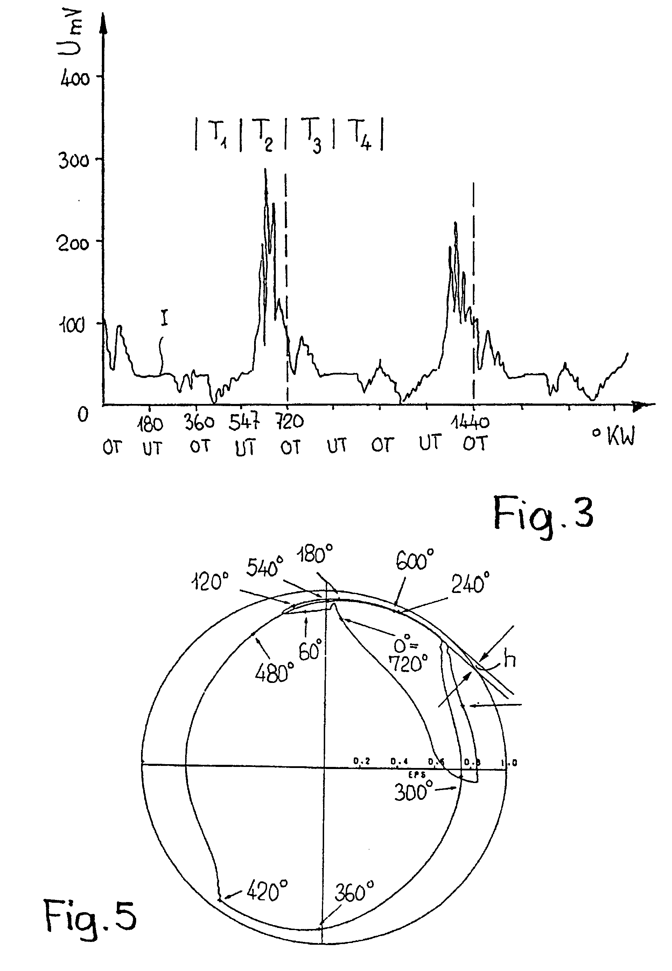

Man hat nun festgestellt, dass sich während eines 4-Takt Arbeitsspieles aus Ansaug-Takt T₁, Verdichtungs-Takt T₂, Arbeits-Takt T₃ und Ausstoss-Takt T₄ in der Antriebskette eines Zylinders Z, die aus einer nicht näher dargestellten, im gemeinsamen Gehäuse 7 eingebauten Zylinderbüchse, dem Kolben 13, dem Kolbenbolzen 12, der Pleuelstange 9, dem Pleuellager 10 und der Kurbelwelle 1 gebildet ist, ein Betriebszustand einstellt, in dem der Übergangswiderstand in den Gleitstellen infolge geringer Schmierfilmdicke niederohmig, das heisst praktisch galvanisch leitend ist und somit ein Durchschalten von der Zylinderwandung bis zur Kurbelwelle gegeben ist. Diese Niederohmigkeit, das heisst die galvanische Leitfähigkeit tritt im zweiten Takt, in dem die Verdichtung erfolgt, im Bereich des oberen Totpunktes OT, vorzugsweise unmittelbar vor dem oberen Totpunkt OT, in dem auch der Zündvorgang erfolgt, auf, wie der Kurve der Figur 3 entnommen werden kann. Dies ist möglich, weil im oberen Totpunkt mindestens ein nicht näher dargestellter Kolbenring des Kolbens wegen der Bewegungsumkehr praktisch keine Bewegung an der Zylinderwandung aufweist und damit auch keine dynamische Schmierung gegeben ist. Der Kolbenring durchdringt dabei den Schmierfilm und liegt an der Zylinderwandung an. Dieses Anliegen des Kolbenringes wird durch den Verbrennungsvorgang unterstützt, bei dem Verbrennungsgase hinter den Kolbenring gelangen, so dass dieser einerseits radial nach aussen gegen die Zylinderwandung und andererseits durch den Druck der Verbrennungsgase auf die Unterseite einer Ringnut im Kolben gedrückt wird. Am Gleitlager 11 des Kolbenbolzens 12 wird ebenfalls angenommen, dass durch die kleine oder bei Bewegungsumkehr fehlende Relativgeschwindigkeit sich kein dauernder tragender dynamischer Schmierfilm aufbauen kann, sodass auch hier die Niederohmigkeit, das heisst Leitfähigkeit konstant gegeben ist.

An Stellen geringer Schmierfilmdicke kann auch am ehesten ein Schmierfilmunterbruch entstehen, der bei nachfolgender Trockenreibung zu einer Reibungserwärmung und bei Paarung verschiedener Werkstoffe zu einem galvanischen Thermostrom führt. Das Diagramm der Figur 3 zeigt die Thermospannung U eines solchen Thermostromes I für ein Pleuellager 10 bei einem Schmierfilmriss und Trockenreibung. Dieser Thermostrom kann dann fliessen und sich somit manifestieren, wenn die oben erwähnte Durchschaltstellung am oberen Totpunkt gegeben ist.

In der Regel wird aufgrund von Mischreibungen in den Gleitlagern stets ein gewisser galvanischer Thermostrom geringer Grösse erzeugt werden, der eine Grundkurve des Thermostromes von geringer Höhe erzeugt. Wenn jedoch in dieser Antriebskette durch einen Lagerschaden ein hoher Thermostrom entsteht, so wird er sich in dieser bestimmten Phase des Arbeitsspieles als plötzlicher grosser Kurvenausschlag zeigen. Dies bedeutet, dass ein Thermostrom in dieser Phase des Arbeitsspieles ein Hinweis darauf ist, dass in der Antriebskette ein Schmierfilm eines Gleitlagers unterbrochen ist, was zu einem Schaden in dieser Antriebskette führen kann. Dabei könnte der Schaden natürlich in jedem Gleitlager dieser Antriebskette auftreten, vorzugsweise wird dies jedoch am Pleuellager 10 der Fall sein, wenn der Ausschlag in der oben erwähnten bestimmten Phase des Arbeitsspieles erfolgt. In dieser Phase ist der Stromdurchgang zwischen Zylinderwandung und Kolben einerseits und am Kolbenbolzen andererseits wegen der erwähnten Niederohmigkeit und der damit verbundenen Durchschalteigenschaft stets gegeben. Am Pleuellager hingegen ist wegen der konstanten hohen Geschwindigkeit im Normalbetrieb ein dynamischer Schmierfilm vorhanden, der einem Stromdurchgang einen hohen Widerstand entgegen setzt, das heisst unterbrechen würde und nur bei Auftreten eines Schadens einerseits niederohmig wird und andererseits bei einer mindestens teilweisen Zerstörung des Schmierfilmes in Verbindung mit der Erwärmung und den unterschiedlichen Lagerwerkstoffen einen fortlaufenden galvanischen Thermostrom liefert, der den erwähnten Ausschlag der Thermostromkurve aber nur im Bereich des oberen Totpunktes, das heisst der erwähnten Durchschaltstellung bewirkt.

Für die Grundlager 2 der Kurbelwelle 1 ergeben sich beispielsweise folgende Überlegungen. Die Lagerzapfen 2a werden während des grössten Teils des Arbeitsspieles gegen die untere Lagerschale 3 gedrückt, wodurch in einem Schadensfall während des Andrückens ein galvanischer Thermostrom entsteht, der fortdauert, jedoch dann unterbrochen wird, wenn sich der Lagerzapfen bei nach oben gerichteter Kraft des Kolbens 13 von der unteren Lagerschale abhebt oder diese zumindest entlastet. Eine solche Kraftumkehr findet in der Ansaugphase statt und führt zu einer Entlastung der unteren Lagerschale des Grundlagers und damit zu einem Unterbruch des Thermostromes. Da dieser kurzzeitige Unterbruch des Thermostromes für jedes Grundlager in einer bestimmten Winkelstellung stattfindet, kann dieser Unterbruch generell als Anzeichen eines Grundlagerschadens und beim Auftreten in einer bestimmten Winkelstellung als Parameter für ein bestimmtes Grundlager dienen.

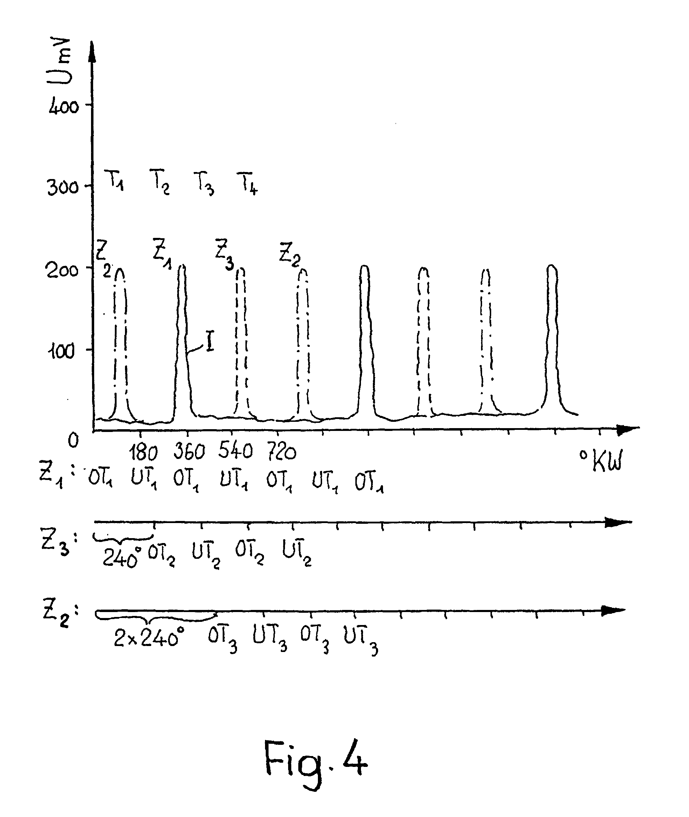

Die Figur 4 zeigt nun für den vorliegenden Dreizylinder-Verbrennungsmotor den Thermospannungsverlauf für Schadensfälle an den verschiedenen Zylindern beziehungsweise Pleuellagern. Wegen des zwischen den einzelnen Zylindern bestehenden Zündabstandes, der je nach Bauform und Zylinderzahl des Verbrennungsmotors unterschiedlich ist und im vorliegenden Fall 240° beträgt, sind die für die einzelnen Zylinder massgebenden Thermospannungskurven ebenfalls um 240° versetzt, sodass am Anzeigegerät bei bekannter Zündfolge (hier 1-3-2) genau erkennbar ist, an welchem Zylinder beziehungsweise welchem Pleuellager ein Thermostrom auftritt, der ein Hinweis für einen Schmierfilmunterbruch und einen beginnenden Schaden an dem entsprechenden Gleitlager ist.

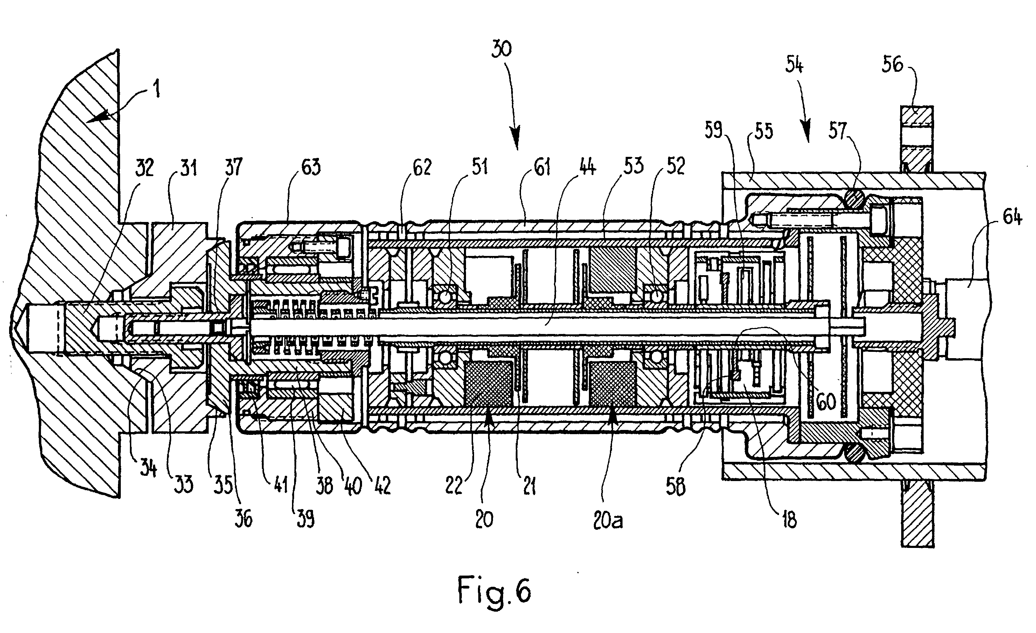

Die Figur 5 zeigt eine weitere Möglichkeit auf, einen Thermostrom an einem bestimmten Pleuellager festzustellen. Als Parameter dient hierfür die in einem bestimmten Betriebszustand sich einstellende Schmiermitteldicke h, die von der Zapfenverlagerung des Pleuellagers während des Betriebes herrührt. Man hat nämlich festgestellt, dass aufgrund von Gas- und Massenkräften sowie den wechselnden Lastzuständen sich die Lagerkräfte ständig in Richtung und Grösse ändern. In Figur 5 ist diese Verlagerungsbahn des Kurbelzapfens und die sich daraus ergebende Schmiermitteldicke h eines Pleuellagers im Polardiagramm für ein Arbeitsspiel eines 4-Takt-Verbrennungsmotors in Abhängigkeit vom Drehwinkel der Kurbelwelle dargestellt. Wegen des periodischen Verlaufes dieses Arbeitsspieles ergibt sich eine geschlossene Kurve, auf der jeweils die Kurbelstellung in Grad angegeben ist. Dadurch entsteht eine Bahn des Zapfenmittelpunktes, die sogenannte Zapfenverlagerungsbahn, die während eines jeden Arbeitsspieles einmal durchlaufen wird. Der Zapfen verändert seine Lage nicht nur in Umfangsrichtung, sondern auch in radialer Richtung. Die Annäherung des Zapfens an die Lagerlauffläche bewirkt eine Verdrängung des Schmiermittels aus dem sich dabei verengenden Spalt h. Ist dieser Spalt sehr klein so wird der Widerstand des Schmierfilmes reduziert und der entsprechende Ort ist eine als Parameter geeignete Winkelstellung, um einen entstandenen schwankenden Thermostrom einem entsprechenden Pleuellager zuzuordnen. Für das Grundlager ergeben sich analoge Verhältnisse jedoch mit umgekehrter Lagerbelastung, das heisst, wenn beim Grundlager - wie oben angegeben - die Hauptbelastung an der unteren Lagerschale gegeben ist findet die Hauptbelastung beim Pleuellager an der oberen Lagerschale statt.

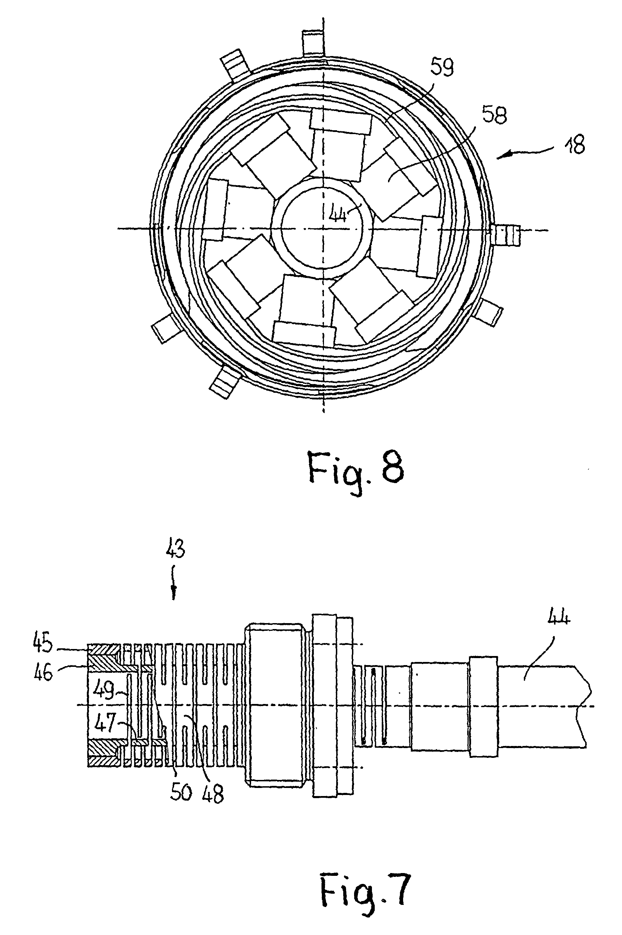

Die Figuren 6 bis 8 zeigen ein an der Kurbelwelle lösbar befestigtes Übermittlungsgerät 30, welches den Kollektor 18 für die Übermittlung des Thermostromes und die Mittel 20,20a für die Feststellung des Drehwinkels enthält. Im einzelnen ist das Übermittlungsgerät 30 wie folgt aufgebaut.

Das Übermittlungsgerät enthält einen Adapter 31, der mittels einer Schraube 32 mit der Kurbelwelle 1 verschraubt ist, wobei ein konischer Teil 33 am Adapter 31 mit einer entsprechenden konischen Ausnehmung 34 an der Welle zur ersten Zentrierung zusammenwirkt. Der Adapter hat auf der der Kurbelwelle 1 abgewandten Seite einen weiteren konischen Teil 35, in den ein Zentrierflansch 36 eingreift, der über eine zentrale Schraube 37 mit der Schraube 32 verschraubt ist, die den Adapter 31 an der Kurbelwelle 1 hält. Der Zentrierflansch 36 ist auf der der Befestigungsseite abgewandten Seite mit einem Hohlzylinder 38 versehen, der nach aussen über ein Lager 39 mit einem ersten feststehenden Gehäuseteil 40 in Verbindung steht. Gegen den Adapter 31 ist das Lager 39 mittels eines Dichtringes 41 abgeschlossen. Auf der gegenüberliegenden Seite ist dem Lager 39 ein nicht näher dargestellter jedoch bekannter Beschleunigungsgeber 42 zugeordnet, der beispielsweise aus drei einzelnen Beschleunigungsgebern besteht, die die Beschleunigungen in allen drei Achsen feststellen können. Im Inneren des Hohlzylinders ist eine elastische Koppelungsvorrichtung 43 angeordnet, die eine antriebsmässige Verbindung zwischen dem Hohlzylinder 38 und einer vorzugsweise hohl ausgebildeten Welle 44 bildet.

Die flexible Koppelungsvorrichtung 43 weist zwei koaxial übereinander angeordnete Hohlzylinder 45,46 auf, die jeweils mehrere bis auf einen Verbindungssteg 47,48 über den ganzen Umfang verlaufende Umfangsschlitze 49,50 aufweisen. Die Verbindungsstege 47,48 benachbarter Umfangsschlitze 49,50 des gleichen Hohlzylinders 45,46 sind um 180° versetzt. Zusätzlich sind die Verbindungsstege 47,48 der beiden Hohlzylinder 45,46 um 90° zueinander versetzt. Dadurch wird erreicht, dass Unregelmässigkeiten des Laufes der Kurbelwelle 1 soweit wie möglich von der Welle 44 ferngehalten werden.

Die als Hohlwelle ausgebildete Welle 44 ist in zwei Lagern 51,52 in einem zweiten ortsfesten Gehäuseteil 53 gelagert, der sich in einem ortsfesten Ständer 54 abstützt. Der Ständer 54 enthält ein Schutzrohr 55, das über äussere Befestigungsflansche 56 an geeigneten Mitteln, wie beispielsweise dem Motorengehäuse, befestigbar ist. Der Gehäuseteil 53 stützt sich über einen Gummiring 57 auf der Innenseite des Schutzrohres 55 ab.

Auf der Welle 44 ist einerseits das Mittel 20 zur Ermittlung des Drehwinkels angeordnet, das die Inkrementscheibe 21 aufweist, deren nicht näher dargestellte, am Umfang verteilte Strichfolge von dem Sensor 22 abgetastet wird. Im vorliegenden Fall ist vorzugsweise ein zweites Mittel 20a zur Drehwinkelermittlung angeordnet, das gegenüber dem ersten Mittel um 90° versetzt ist. Das zweite Mittel dient einerseits der Sicherheit und andererseits zum Ausgleich etwaiger Schwankungen in der Drehbewegung der Welle.

Auf der Welle sitzt weiter der Kollektor 18, der mehrere über den Umfang verteilte Schleifkontakte 58 besitzt, die jeweils mittels eines Federarmes 59 mit dem feststehenden Gehäuseteil 53 verbunden sind. Es sind vorzugsweise acht am Umfang verteilte Schleifkontakte vorhanden, die auf verschiedene Umlaufbahnen 60 verteilt sind, wobei vorzugsweise jeweils zwei Schleifkontakte 58 um 180° versetzt mit der gleichen Umlaufbahn 60 zusammenwirken können. Diese Ausbildung des Kollektors soll einen möglichst genauen, störungsfreien und widerstandsfreien Abgriff des Thermostromes ermöglichen und etwaige Laufungenauigkeiten der Welle 44 ausgleichen.

Die feststehenden Gehäuseteile 40 und 53 werden gebildet durch ein Mantelrohr 61, das über einen grossen Teil der Länge mit Umfangsschlitzen 62 versehen ist, die analog den Umfangsschlitzen 49,50 der Hohlzylinder 45,46 ausgebildet sind, um auch hier Laufungenauigkeiten, das heisst Schwingungen der Kurbelwelle auszugleichen. Das Mantelrohr 61 ist mit einer flexiblen Schutzhülle 63 versehen.

An einem Anschlussteil 64 werden die nicht näher dargestellten Leiter der einzelnen Geber und Sensoren mit den Anschlussleitungen 17,23 für das Steuergerät 14 verbunden.

### BEZUGSZEICHENLISTE

- 1: Kurbelwelle
- 2: Grundlager
- 2a: Lagerzapfen
- 3: Lagerschale
- 4: Weissmetallschicht
- 5: Schmierfilm
- 6: Lagerbock
- 7: Gehäuse
- 8: Kurbelzapfen
- 9: Pleuelstange
- 10: Pleuellager
- 11: Gleitlager
- 12: Kolbenbolzen
- 13: Kolben
- 14: Steuergerät
- 15: Anzeigevorrichtung
- 16: Verbindungsleitung
- 17: Verbindungsleitung
- 18: Kollektor
- 19: Widerstand
- 20: Mittel für Drehwinkel
- 20a: Mittel für Drehwinkel
- 21: Inkrementscheibe
- 22: Sensor
- 23: Leitung
- 24: Mittel für Zündfolge
- 25: Leitung
- 26: Zündverteiler
- 27: Zündkabel
- 28: Zündkerze
- 30: Übermittlungsgerät
- 31: Adapter
- 32: Schraube
- 33: konischer Teil
- 34: konische Ausnehmung
- 35: konischer Teil
- 36: Zentrierflansch
- 37: Schraube
- 38: Hohlzylinder
- 39: Lager
- 40: Gehäuseteil
- 41: Dichtung
- 42: Beschleunigungsgeber
- 43: Koppelungsvorrichtung
- 44: Welle
- 45: Hohlzylinder
- 46: Hohlzylinder
- 47: Verbindungssteg
- 48: Verbindungssteg
- 49: Umfangsschlitz
- 50: Umfangsschlitz
- 51: Lager
- 52: Lager
- 53: Gehäuseteil
- 54: Ständer
- 55: Schutzrohr
- 56: Flansch
- 57: Gummiring
- 58: Schleifkontakt
- 59: Federarm
- 60: Umlaufbahn
- 61: Mantelrohr
- 62: Umfangsschlitz
- 63: Schutzhülle
- 64: Anschlussteil

- h: Schmierfilm-Dicke
- I: Thermostrom
- U: Thermospannungsabfall
- OT: oberer Totpunkt
- UT: unterer Totpunkt
- T₁: Ansaug-Takt
- T₂: Verdichtungs-Takt
- T₃: Arbeits-Takt
- T₄: Ausstoss-Takt
- Z₁: erster Zylinder
- Z₂: zweiter Zylinder
- Z₃: dritter Zylinder

## Patentansprüche

1. Verfahren zur Überwachung von Gleitlagern einer Bubkolben-Maschine, insbesondere eines Verbrennungsmotors, bei der mindestens in einem Zylinder (Z₁,Z₂,Z₃) ein verschieblicher Kolben (13) über eine Pleuelstange (9) mit einer Kurbelwelle (1) verbunden ist, wobei ein Thermostrom (I), der jeweils beim Abreissen eines Schmierfilmes (5) zwischen sich relativ zueinander bewegenden Lagerteilen aus unterschiedlichen, elektrisch leitenden Werkstoffen und auf Grund eines Temperaturgradienten an einem solchen Gleitlager (2a,10,11) entsteht, in einem Steuergerät (14) als Steuersignal benutzt wird, **dadurch gekennzeichnet, dass** der Thermostrom (I) vergrössert und gespreizt wird und in Abhängigkeit vom Drehwinkel der Kurbelwelle (1) über mindestens ein Arbeitspiel auf signifikante Symptome der Gleitlager (2a,10,11) abgefragt wird, wobei beim Auftreten eines signifikanten Symptoms ein Steuersignal für einen Schaden eines bestimmten Gleitlagers ausgegeben wird.

2. Verfahren nach Anspruch 1, **dadurch gekennzeichnet, dass** man für die Ermittlung des Steuersignals eines Gleitlagers als Parameter die Winkelstellung wählt, in der die Schmierfilmdicke während des Normalbetriebes am kleinsten ist.

3. Verfahren nach Anspruch 1 oder 2, **dadurch gekennzeichnet, dass** man für die Ermittlung des Steuersignals eines Gleitlagers als Parameter die Verlagerungsbahn des Lagerzapfens wählt.

4. Verfahren nach einem der Ansprüche 1 bis 3, **dadurch gekennzeichnet, dass** man für die Ermittlung des Steuersignals als Parameter die Stellung der Kurbelwelle (1) wählt, in der sich der zugehörige Kolben (13) im Bereich des oberen Totpunktes (OT) in der Verdichtungsphase befindet.

5. Verfahren nach einem der Ansprüche 1 bis 4, **dadurch gekennzeichnet, dass** man für die Ermittlung des Steuersignals als Parameter das Drehmoment und/oder die Drehzahl der Kurbelwelle (1) verwendet.

6. Verfahren nach einem der Ansprüche 1 bis 5, **dadurch gekennzeichnet, dass** man den Thermostrom (I) bei einem Verbrennungsmotor in Abhängigkeit von der Zündfolge der Zylinder (Z₁,Z₂,Z₃) setzt.

7. Einrichtung zur Durchführung des Verfahrens nach einem der Ansprüche 1 bis 6, mit einem mittels Leitungen (16,17) einerseits mit dem Gehäuse (7) und andererseits mit der Kurbelwelle (1) der Hubkolben-Maschine verbindbaren Steuergerät (14), welches bei Auftreten eines Thermostromes (I) ein Steuersignal abgibt, **dadurch gekennzeichnet, dass** das Steuergerät (14) Mittel enthält, die den Thermostrom (I) vergrössern und spreizen und in Abhängigkeit von einem Drehwinkelsignal der Kurbelwelle (1) über mindestens ein Arbeitspiel auf signifikante Symptome der Gleitlager (2a, 10,11) abfragen, wobei die Mittel beim Auftreten eines signifikanten Symptoms ein Steuersignal für einen Schaden eines bestimmten Gleitlagers ausgeben.

8. Einrichtung nach Anspruch 7, **dadurch gekennzeichnet, dass** mit dem Steuergerät (14) Mittel zur Erfassung der Totpunkt-Stellungen des Kolbens (13) verbunden sind.

9. Einrichtung nach Anspruch 7 oder 8, **dadurch gekennzeichnet dass** sie ein mit der Kurbelwelle (1) der Hubkolben-Maschine verbindbares Übermittlungsgerät (30) für den Thermostrom (I) aufweist.

10. Einrichtung nach Anspruch 9, **dadurch gekennzeichnet, dass** das Übermittlungsgerät (30) einen Drehgeber (20) zur Erfassung der Winkellage und der Drehzahl der Kurbelwelle (1) aufweist.

11. Einrichtung nach Anspruch 9 oder 10, **dadurch gekennzeichnet, dass** das Übermittlungsgerät (30) einen Kollektor (18) mit mehreren über den Umfang und vorzugsweise auf verschiedene mit der Kurbelwelle (1) koppelbare Umlaufbahnen (60) verteilten Schleifkontakten (58) aufweist, die mittels Federarme (59) mit einem den Abtastbereich umgebenden feststehenden Gehäuseteil (53) verbunden sind.

12. Einrichtung nach einem der Ansprüche 9 bis 11, **dadurch gekennzeichnet, dass** das Übermittlungsgerät (30) mindestens einen mit der Kurbelwelle (1) koppelbare Beschleunigungsgeber (42) aufweist.

13. Einrichtung nach einem der Ansprüche 9 bis 12, **dadurch gekennzeichnet, dass** das Übermittlungsgerät (30) einen mit der Kurbelwelle (1) koaxial verbindbaren Adapter (31) aufweist, der über eine flexible Koppelungsvorrichtung (43) mit einer Welle (44) verbunden ist, die in einem ortsfesten Gehäuse (53) gelagert ist, an dem Leitungen (17,23) des Übermittlungsgerätes (30) zum Steuergerät (14) angeschlossen sind.

14. Einrichtung nach Anspruch 13, **dadurch gekennzeichnet, dass** die flexible Koppelungsvorrichtung (43) zwei koaxial übereinander angeordnete Hohlzylinder (45,46) aufweist, die jeweils mehrere bis auf einen Verbindungssteg (47,48) über den ganzen Umfang verlaufende Umfangsschlitze (49,50) aufweisen, wobei die Verbindungsstege (47,48) benachbarter Umfangsschlitze (49,50) um 180° versetzt sind und überdies die Verbindungsstege (47,48) der beiden Hohlzylinder (45,46) um 90° zueinander versetzt sind, wobei weiter die beiden Hohlzylinder (45,46) an einem Ende miteinander und am anderen Ende einerseits mit dem Adapter (31) und andererseits mit der Welle (44) verbunden sind.

## Claims

1. A method for monitoring plain bearings of a reciprocating piston machine, in particular of an internal combustion engine, in which, at least in one cylinder (Z₁, Z₂, Z₃), a displaceable piston (13) is connected to a crankshaft (1) via a connecting rod (9), a thermocurrent (I), which is produced whenever a lubricating film (5) between bearing parts which move relative to one another and are made of different electrically conducting materials is torn off, on the basis of a temperature gradient at such a plain bearing (2a, 10, 11) being used as a control signal in a control unit (14), **characterized in that** the thermocurrent (I) is amplified and spread and interrogated for significant symptoms of the plain bearings (2a, 10, 11) over at least one working cycle as a function of the angle of rotation of the crankshaft (1), a control signal for damage to a specific plain bearing being output when a significant symptom occurs.

2. The method as claimed in claim 1, **characterized in that** the angular position in which the lubricating film thickness is at a minimum during normal operation is selected as parameter for determining the control signal of a plain bearing.

3. The method as claimed in claim 1 or 2, **characterized in that** the displacement path of the bearing journal is selected as parameter for determining the control signal of a plain bearing.

4. The method as claimed in one of claims 1 to 3, **characterized in that** the position of the crankshaft (1) in which the associated piston (13) is located in the vicinity of the top dead center (OT) in the compression phase is selected as parameter for determining the control signal.

5. The method as claimed in one of claims 1 to 4, **characterized in that** the torque and/or the rotational speed of the crankshaft (1) are used as parameters for determining the control signal.

6. The method as claimed in one of claims 1 to 5, **characterized in that** the thermocurrent (I) is placed in relationship with the ignition sequence of the cylinders (Z₁, Z₂, Z₃) in an internal combustion engine.

7. A device for carrying out the method as claimed in one of claims 1 to 6, having a control unit (14) which can be connected by means of lines (16, 17) to the housing (7), on the one hand, and to the crankshaft (1) of the reciprocating piston machine, on the other, and which outputs a control signal when a thermocurrent (I) occurs, **characterized in that** the control unit (14) contains means which amplify and spread the thermocurrent (I) and interrogate it for significant symptoms of the plain bearings (2a, 1o, 11) over at least one working cycle as a function of an angle of rotation signal of the crankshaft (1), the means outputting a control signal for damage to a specific plain bearing when a significant symptom occurs.

8. Device according to claim 7, **characterized in that** means for sensing the dead center positions of the piston (13) are connected to the control unit (14).

9. Device according to claim 7 or 8, **characterized in that** it has a transfer unit (30), which can be connected to the crankshaft (1) of the reciprocating piston machine, for the thermocurrent (I).

10. Device according to claim 9, **characterized in that** the transfer unit (30) has a rotary sensor (20) for sensing the rotary position and the rotational speed of the crankshaft (1).

11. Device according to claim 9 or 10, **characterized in that** the transfer unit (30) has a collector (18) with a plurality of sliding contacts (58) distributed over the circumference and preferably on various orbits (60) which can be coupled to the crankshaft (1), said sliding contacts (58) being connected by means of spring arms (59) to a fixed housing part (53) which surrounds the sensing range.

12. Device as claimed in one of claims 9 to 11, **characterized in that** the transfer unit (30) has at least one acceleration sensor (42) which can be coupled to the crankshaft (1).

13. Device according to one of claims 9 to 12, **characterized in that** the transfer unit (30) has an adapter (31) which can be coaxially connected to the crankshaft (1) and which is connected via a flexible coupling device (43) to a shaft (44) which is mounted in a fixed housing (53) to which lines (17, 23) of the transfer unit (30) to the control unit (14) are connected.

14. The device as claimed in claim 13, **characterized in that** the flexible coupling device (43) has two hollow cylinders (45, 46) which are arranged coaxially one on top of the other and which each have a plurality of circumferential slits (49, 50) which run, with the exception of a connecting web (47, 48), over the entire circumference, the connecting webs (47, 48) of adjacent circumferential slits (49, 50) being offset by 180° and in addition the connecting webs (47, 48) of the two hollow cylinders (45, 46) being offset with respect to one another by 90°, the two hollow cylinders (45, 46) also being connected at one end to one another and at the other end to the adapter (31) on the one hand and to the shaft (44) on the other.

## Revendications

1. Procédé de surveillance des paliers lisses d'un moteur à pistons alternatifs notamment d'un moteur à combustion interne selon lequel dans un cylindre (Z₁, Z₂, Z₃) un piston (13) est relié par une bielle (9) à un vilebrequin (1) ;
un courant thermique (I) se forme chaque fois au décrochage d'un film lubrifiant (5) entre des parties de palier mobiles l'une par rapport à l'autre, réalisées dans des matériaux à conductivité électrique différents et sous l'effet d'un gradient de température au niveau d'un tel palier lisse (2a, 10, 11), utilisé comme signal de commande dans un appareil de commande (14),
**caractérisé en ce que**
on amplifie et on étale le courant thermique (I) et en fonction de l'angle de rotation du vilebrequin (1), on interroge pendant au moins un cycle de fonctionnement, les symptômes significatifs du palier lisse (2a, 10, 11); et
lorsque se produit un symptôme significatif on émet un signal de commande pour un incident dans un palier (10) déterminé.

2. Procédé selon la revendication 1,
**caractérisé en ce que**
pour déterminer le signal de commande d'un palier lisse, on sélectionne comme paramètre la position angulaire dans laquelle l'épaisseur du film lubrifiant est la plus mince pendant le fonctionnement normal.

3. Procédé selon la revendication 1 ou 2,
**caractérisé en ce que**
pour déterminer le signal de commande d'un palier lisse, on sélectionne comme paramètre le trajet de déplacement du tourillon de palier.

4. Procédé selon l'une des revendications 1 à 3,
**caractérisé en ce que**
pour déterminer le signal de commande, on utilise comme paramètre, la position du vilebrequin (1) dans laquelle le piston (13) correspondant se trouve au niveau du point mort haut (OT) en phase de compression.

5. Procédé selon l'une des revendications 1 à 4,
**caractérisé en ce que**
pour déterminer le signal de commande, on utilise le paramètre le couple et/ou la vitesse de rotation du vilebrequin (1).

6. Procédé selon l'une des revendications 1 à 5,
**caractérisé en ce que**
l'on fixe le courant thermique (I) d'un moteur à combustion interne suivant l'ordre d'allumage des cylindres (Z₁, Z₂, Z₃).

7. Installation pour la mise en oeuvre du procédé selon l'une des revendications 1 à 6, comportant un appareil de commande relié par des lignes (16, 17) d'une part au boîtier (7) et d'autre part au vilebrequin (1), et lorsque se produit un courant thermique (I) cet appareil de commande émet un signal de commande,
**caractérisée en ce que**
l'appareil de commande (14) comporte des moyens qui amplifient le courant thermique (I) et l'étalent en fonction d'un signal d'angle de rotation du vilebrequin (1), ils interrogent pendant au moins un cycle de fonctionnement, les symptômes significatifs des paliers (2a, 10, 11), les moyens émettant un signal de commande pour un incident d'un palier lisse déterminé lorsque se produit un symptôme significatif.

8. Installation selon la revendication 7,
**caractérisée en ce que**
l'appareil de commande (14) est relié à des moyens pour saisir les positions de point mort du piston (13).

9. Installation selon la revendication 7 ou 8,
**caractérisée par**
un appareil de transmission (30) pour le courant thermique (I), cet appareil étant relié au vilebrequin (I) du moteur à pistons alternatifs.

10. Installation selon la revendication 9,
**caractérisée en ce que**
l'appareil de transmission (30) comporte un capteur de rotation (20) pour saisir la position angulaire et la vitesse de rotation du vilebrequin (1).

11. Installation selon la revendication 9 ou 10,
**caractérisée en ce que**
l'appareil de transmission (30) comporte un collecteur (18) avec plusieurs contacts de frottement (58) répartis à la périphérie et de préférence sur des trajectoires périphériques différentes couplées au vilebrequin (1), ces contacts étant reliés par des bras élastiques (59) à une partie de boîtier (53) fixe, entourant la zone de détection.

12. Installation selon l'une des revendications 9 à 11,
**caractérisée en ce que**
l'appareil de transmission (30) comporte au moins un capteur d'accélération (42) susceptible d'être couplé au vilebrequin (1).

13. Installation selon l'une des revendications 9 à 12,
**caractérisée en ce que**
l'appareil de transmission (30) comporte un adaptateur (31) relié coaxialement au vilebrequin (1), cet adaptateur étant relié à un arbre (44) par un dispositif de couplage souple (43), cet arbre étant monté dans un boîtier fixe (53) auquel sont raccordées les lignes (17, 23) de l'appareil de transmission (30) pour l'appareil de commande (14).

14. Installation selon la revendication 13,
**caractérisée en ce que**
le dispositif de couplage souple (43) comporte deux cylindres creux (45, 46) placés coaxialement l'un au-dessus de l'autre et qui ont plusieurs fentes périphériques (49, 50) occupant toute la périphérie à l'exception d'une branche de liaison (47, 48), la branche de liaison (47, 48) de la fente périphérique voisine (49, 50) étant décalée de 180° et de plus les branches de liaison (47, 48) des deux cylindres creux (45, 46) sont décalées l'une de l'autre de 90°, et en outre les deux cylindres creux (45, 46) sont reliés entre eux par une extrémité alors que par l'autre extrémité, ils sont d'une part reliés à l'adaptateur (31) et d'autre part à l'arbre (44).
